# EUROPEAN PATENT SPECIFICATION

(11) **EP 0 933 855 B1**
(45) Date of publication and mention of the grant of the patent: **16.05.2001**
(21) Application number: 98830049.7
(22) Date of filing: 04.02.1998
(51) Int. Cl.: H02G 5/06

(54) **Prefabricated tubular busbar element**
Vorgefertigtes Teil eines Sammelschienenkanals
Elément tubulaire préfabriqué pour barres omnibus

(43) Date of publication of application: 04.08.1999
(73) Proprietor: Zucchini S.P.A., 25136 Brescia (IT)
(72) Inventor: Ghidinelli, Paolo, 25060 Pezzaze (BS) (IT)
(74) Representative: Ghioni, Carlo Raoul Maria

(56) References cited:
- GB-A- 2 112 587
- US-A- 2 913 513
- US-A- 3 124 642
- US-A- 3 559 148
- US-A- 3 804 970
- US-A- 4 213 003
- US-A- 4 945 188
- US-A- 5 137 476
- HEINZ PAEG: "Cast-resin insulated busbars carry high currents" SIEMENS POWER ENGINEERING & AUTOMATION PRODUCT NEWS , vol. 6, no. 3, September 1986, XP002071422

## Description

The present invention relates to a prefabricated tube element for motive power distribution in building constructions comprising a box-shaped casing, a plurality of conductive bars housed inside said casing and support and spacing elements for said conductive bars engaged in said casing.

It is known that prefabricated tubes, currently referred to as bus ducts, for distributing motive power in building constructions, in particular for industrial use or offices, consist of elements of standardized length, 3 metres long for example, connectable with each other at the ends thereof, so as to obtain the needed longitudinal extensions for each specific requirement.

Since obviously sizes of a building in a horizontal or vertical direction or of the spaces formed therein hardly ever correspond to a multiple of the standard length of each individual element, during the planning or production step it is necessary to provide for one or more elements to be constructed expressly to size in order to be able to adjust the standard element sizes of the ducts to the required overall length. In particular, in the case of ducts in a vertical direction, or upright posts, usually the junction area between one element and the next one is required to be placed at an accessible position, generally very close to the floor slab between adjacent storeys.

Also the pull windows into which the corresponding pull boxes are inserted must be in the same position at each storey. In addition, the flame-arresting partitions, fastened to predetermined regions of a prefabricated tube or duct, are to be always disposed at the slab thickness or the thickness of a wall.

Since the room height varies from a building to another, within given limits, it may be necessary to provide for many ducts of unstandard length, which are on the contrary manufactured in the different sizes corresponding to the individual requirements.

Costs and supply times of these elements of unstandard length provided in the known art are obviously greater than those of the elements made in fixed sizes for mass-production.

It is also known from document US- A- 2,913,513 a bus duct for electrically distribution systems comprising a housing section having an intermediate portion and two end portions which telescope with the intermediate portion, a plurality of bars disposed in sequential relation and having end overlapping portions secured by fastening means. The overall length of the bus duct can be adjusted over a predetermined range.
It is known from document US-A-3,804, 970 an electrical bus system provided with mechanical and electrical connecting means formed by a substantially tubular section member which houses an end portion of two adjacent conductive bars. The tubular member has substantially C-shaped cross-section which defines a longitudinal slit by its opening. The conductive bars are locked by means of bolts acting perpendicularly with respect with said slit.
The document US-A-4,945,188 shows a bus ducting system in which the adjacent conductive bars are connected by connecting means which comprises flexible elements fastened to the end portion of each conductive bar. the flexible elements is foldable upon itself depending on the mutual spacing position of the adjacent bars.
In document US-A-3,124,642 a prefabricated tube element for motive power is disclosed formed by two box-shaped end portions and one intermediate box-shaped portion which is overlapped on said end portions to varying extent an is loched thereto by means of fastening means.

Under this situation, the technical task underlying the present invention is to devise a prefabricated tube element for motive power distribution in building constructions capable of substantially obviating the above mentioned drawbacks.

Within the scope of this technical task it is an important aim of the invention to devise a prefabricated tube element capable of being adapted, by simple quick and practical operations, to the different longitudinal-extension requirements imposed by each specific application without appropriate planning and production steps being needed for each job order.

The technical task mentioned and the aim specified are substantially achieved by a prefabricated tube element as define in the claims.

Description of some preferred but non-exclusive embodiments of a prefabricated tube element in accordance with the invention is now given hereinafter, by way of non-limiting example, with the aid of the accompanying drawings, in which:
- Fig. 1 is a fragmentary partly exploded perspective view of a tube element in accordance with the invention;
- Fig. 2 is a perspective view of a first embodiment of mechanical and electrical connecting means for two sections of a conductive bar;
- Fig. 3 is a perspective view of a tube element brought to its maximum length;
- Fig. 4 is a perspective view of a tube element reduced to its minimum length;
- Fig. 5 is a view similar to that in Fig. 2 showing a second embodiment of the connecting means;
- Fig. 6 is a view similar to that in Fig. 2 showing a third embodiment of the connecting means;
- Fig. 7 is a diagrammatic view similar to the one in Fig. 2 for a fourth embodiment of the connecting means;
- Fig. 8 shows a view similar to that in Fig. 2 but relating to a fifth embodiment of the connecting means;
- Fig. 9 is a view. similar to that in Fig. 2 showing a sixth embodiment of the connecting means;
- Fig. 10 is a front view of a support element for conductive bars.

With reference to the drawings, a prefabricated tube element in accordance with the invention has been generally identified by reference numeral 1.

It comprises a plate-made casing 2 adapted to house a plurality of electrically conductive bars 3 which are carried and mutually spaced apart by support and spacing elements 4 engaged within the casing 2.

At its ends the tube element 1 comprises junction areas 1a and 1b adapted for connections, following known modalities, with other tube elements.

In an original manner, each conductive bar 3 is divided into two sections, i.e. a first section 3a and a second section 3b that can be moved away from or close to each other in a longitudinal direction depending on the overall length that the bar must have, based on the system requirements.

Likewise, casing 2 comprises at least two box-shaped portions, i.e. a first portion 2a and a second portion 2b each formed of two shell halves telescopically slidable and susceptible of being engaged with each other by fastening means 5 consisting of screws and respective nuts for example, so that they adapt themselves to the longitudinal overall dimensions of the conductive bars 3.

Interposed between the sections 3a and 3b of each bar 3 is appropriate connecting means 6 both of the mechanical and electrical type, enabling said sections to be locked to each other and the needed electrical continuity to be supplied to the sections themselves.

The connecting means 6 can be embodied in several different ways.

In the accompanying drawings six different embodiments are shown, by way of example only.

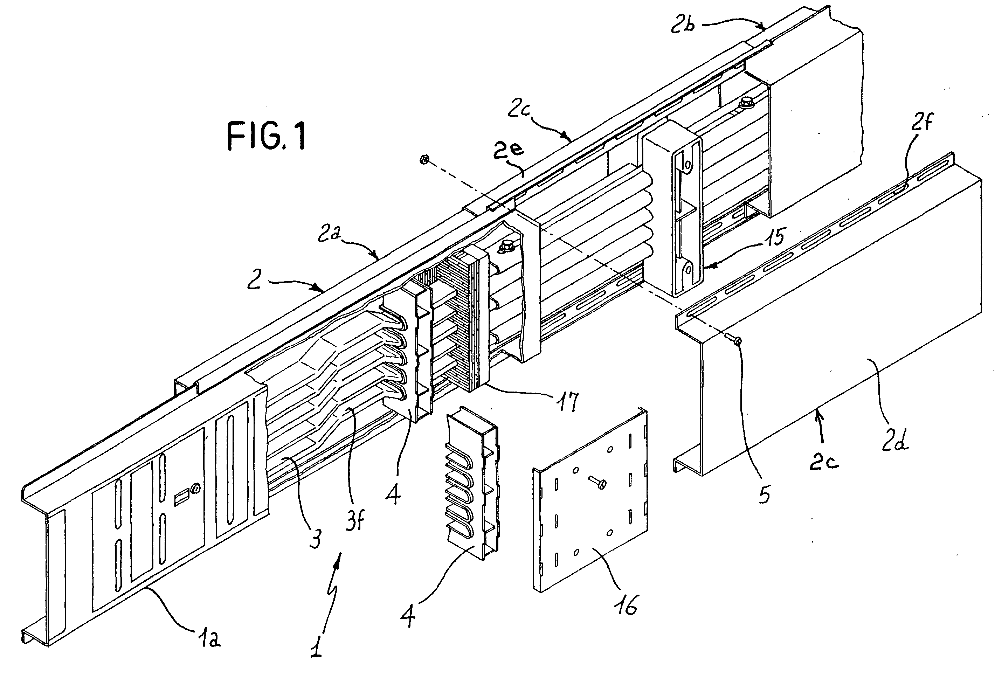

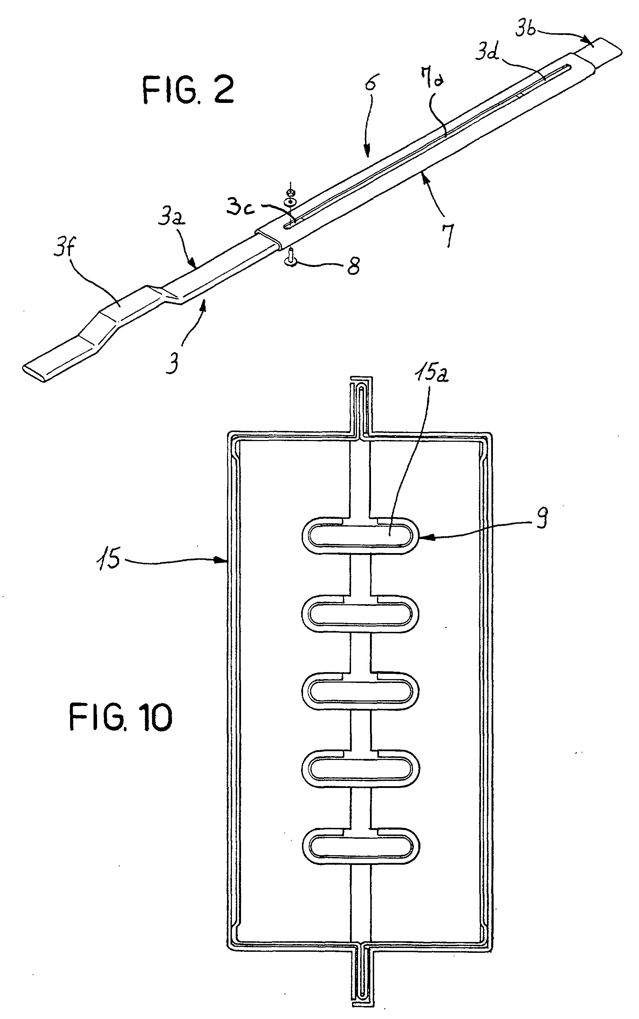

In a first embodiment shown in Figs 1 and 2 the connecting means 6 comprises a substantially tubular section member 7 of sizes adapted to slidably house end portions 3c and 3d of the first section 3a and the second section 3b of bars 3, respectively.

Section member 7 has a longitudinal slot 7a that can be passed through by locking elements, embodied by through bolts 8 for example that also penetrate into holes formed in the end portions 3c and 3d of the first and second sections 3a and 3b of bar 3.

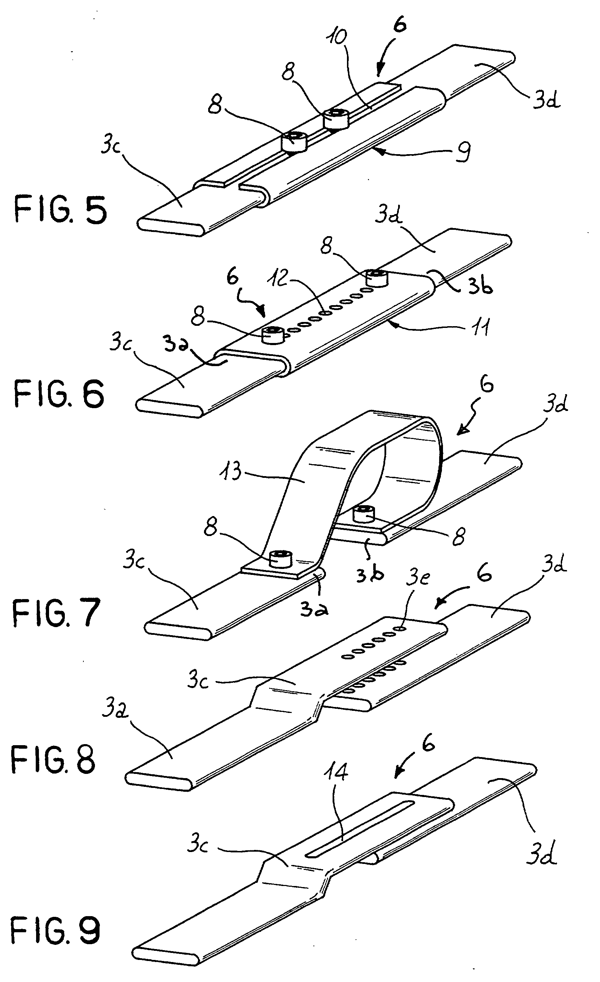

In a second embodiment reproduced in Fig. 5 the connecting means 6 comprises a section member 9 of a substantially C-shaped cross-section, so that the "C" opening defines a longitudinal slit 10 into which through bolts 8 can be inserted, which bolts also pass through the end portions 3c and 3d.

In a third embodiment shown in Fig. 6 the connecting means 6 comprises a tubular section member 11 provided with a plurality of through holes 12 into which bolts 8 can be inserted, which bolts also pass through the end portions 3c and 3d of bar 3.

In a fourth embodiment shown in Fig. 7 the connecting means 6 comprises a flexible element 13 steadily secured by bolts 8 for example, to the final parts of the end portions 3c and 3d of each bar.

The flexible element 13 can be either stretched or folded upon itself to a varying extent depending on the mutual spacing positions of sections 3a and 3b of bar 3, which sections are obviously to be locked with respect to casing 2 by other means not shown.

In a fifth embodiment shown in Fig. 8 the connecting means 6 between sections 3a and 3b of bar 3 are defined, as regards the electric part, directly by the end portions 3c and 3d one of which is suitably bent and offset relative to the longitudinal-extension axis of the bar so that it can be brought into contact by overlapping with the other end portion.

The end portions 3c and 3d have through holes 3e longitudinally in alignment which, by means of bolts 8, enable sections 3a and 3b to be mutually locked to the required position.

Finally, in a sixth embodiment diagrammatically shown in Fig. 9 the connecting means 6 is similar to means shown in Fig. 8, but the through holes of one end portion of bar 3 are replaced by a longitudinal through slot 14 enabling a continuous adjustment of the mutual positioning of sections 3a and 3b.

In order to conveniently support and space the conductive bars 3 from each other at the region where the connecting means 6 is located, at least one support element 15 (Figs. 1 and 10) is provided which is formed with through seats 15a adapted to house either the tubular connecting section members 7, or 9 or 11, or the overlapped end portions 3c and 3d.

Advantageously casing 2, in addition to the first and second box-shaped portions 2a and 2b located at the ends, further comprises an intermediate box-shaped portion disposed close to the connecting means 6 of the bar and also consisting of a pair of shell halves 2d and 2e.

The intermediate box-shaped portion 2c can be superposed to a variable extent on the final regions of the box-shaped end portions 2a and 2b and is formed with a plurality of through holes 2f, preferably of the elongated type i.e. in the form of slots, for carrying out locking, by screw-threaded fastening means 5, with the box-shaped end portions themselves.

Preferably, at least the first section 3a of each bar 3 comprises a handle-shaped region 3f, that is a laterally offset or misaligned region relative to the longitudinal-extension axis of the bar.

Close to the opposite ends of said handle-shaped region 3f there are two support and spacing elements 4 that in turn are locked within casing 2 by a fastening plate 16 applied to the outside of the casing itself by means of screws.

In this way, each bar 3 is prevented from longitudinally sliding in both directions due to its own weight, and the tube element 1 can be mounted vertically irrespective of the fact that the first box-shaped portion 2a should be disposed, for example, at a high or low position.

At least one flame-arresting partition 17 is finally applied to bar 3, at the first section 3a thereof, for example.

Use of a prefabricated tube element, described above mainly as regards structure, is as follows.

In order to adjust the longitudinal length of the conductive bars 2 and outer casing 2, first of all the shell half 2d of the intermediate box-shaped portion 2c is removed.

In the embodiments in which provision is made for section member 7 or section members 9 or 11, bolts 8 joining the first section 3a of each bar of the involved section member are maintained tight and bolts connecting said section member with the second section 3b are loosened.

The second sections 3b are slidably moved in the respective section members until bars 3 reach the required length.

After the second sections 3 have been locked by means of the connecting bolts, the second box-shaped portion 2b is moved by sliding on the shell half 2e which remains fastened to the first box-shaped portion 2a, in order to adjust the casing 2 length to the new extension of the conductive bars.

Finally, the shell half 2d is put back into its seat and locked to the box-shaped portions 2a and 2b by the fastening screws 5.

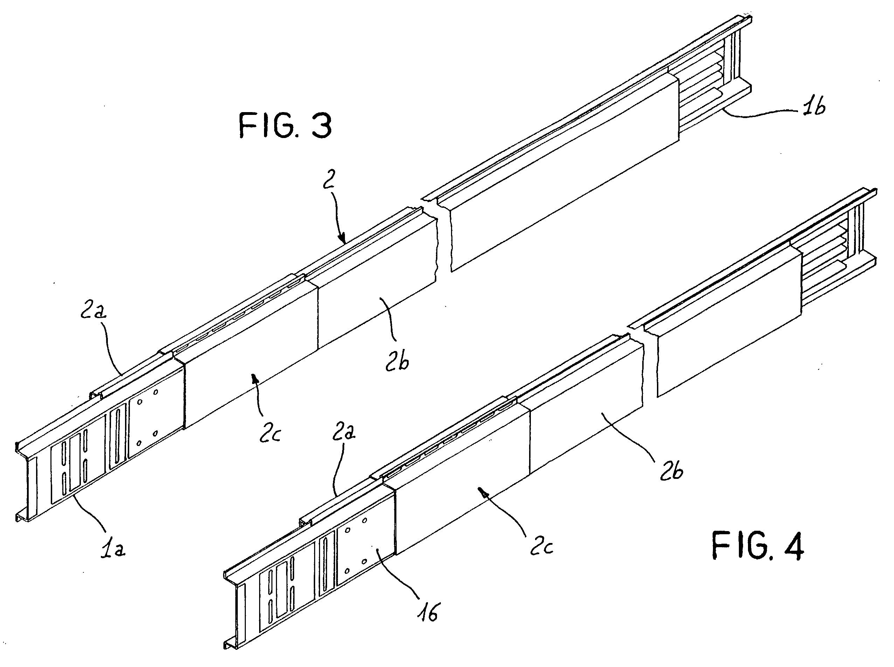

Shown in Fig. 3 is the tube element 1 brought to its maximum length, i.e. when both sections 3a and 3b of each bar 3 and the box-shaped portions 2a and 2b of casing 2 are locked to their maximum mutual distance allowed by the connecting means 6 and the intermediate box-shaped portion 2c, respectively.

In Fig. 4 the tube element 1 is shown when reduced to its minimum length, that is when the maximum possible approaching between sections 3a and 3b of each bar and the box-shaped portions 2a and 2b of casing 2 is obtained.

The invention achieves important advantages.

As a matter of fact, the tube elements in accordance with the invention can be directly adapted in situ, during the installation step, to the extension requirements imposed by the sizes of the buildings in which they are to be set.

They can constitute compensation elements for other elements of fixed length to which they are connected or, in the case of vertical applications between one storey and the next one, they can be directly joined to each other and such adjusted as to dispose the flame-arresting partition at the floor slab and place the junction area at a position emerging from the floor of the storey above.

It should be pointed out that the above illustrated tube elements enable costs and setting times of the motive power installations to be reduced because they can be mass-produced as standardized elements always available in stock.

## Claims

1. A prefabricated tube element for motive power distribution in building constructions comprising:
- a box-shaped casing (2)
- a plurality of conductive bars (3) housed inside said casing (2),
- support and spacing elements (4) for said conductive bars (3) engaged in said casing (2),
- each of said conductive bars (3) comprising at least two sections (3a, 3b) that can be moved away from and close to each other in a longitudinal direction,
- said casing (2) comprising at least two box-shaped portions (2a, 2b) telescopically slidable and susceptible of being engaged with each other by fastening means (5), so that they adapt themselves to the longitudinal overall dimensions of said conductive bars (3); and
- mechanical and electrical connecting means (6) being provided between said sections (3a, 3b) of each conductive bar,
characterized in that each of said bars (3) comprises a handle-shaped region (3f) laterally offset relative to the longitudinal-extension axis of the bar (3) and in that at least two support and spacing elements (4) are provided which are disposed on said bars (3) close to opposite ends of said handle-shaped regions (3f) of the bars (3), said support and spacing elements (4) being locked to the casing (2).

2. An element as claimed in claim 1, characterized in that said mechanical and electrical connecting means (6) comprises a substantially tubular section member (7, 9, 11) adapted to slidably house end portions (3c, 3d) of said sections (3a, 3b) of each conductive bar and locking elements (8) between said end portions (3c, 3d) and section member (7, 9, 11).

3. An element as claimed in claim 2, characterized in that said section member (7) has a longitudinal slot (7a) and said locking elements (8) are embodied by bolts passing through said slot (7a).

4. An element as claimed in claim 2, characterized in that said section member (9) has a substantially C-shaped cross-section adapted to define a longitudinal slit (10) by its opening.

5. An element as claimed in claim 2, characterized in that said section member (11) has a plurality of through holes (12) which are longitudinally aligned in succession and said locking elements (8) are embodied by bolts to be inserted through said through holes (12).

6. An element as claimed in claim 1, characterized in that said mechanical and electrical connecting means (6) comprises a flexible element (13) fastened to the final parts of end portions (3c, 3d) of said sections (3a, 3b) of each conductive bar (3), said flexible element (13) being foldable upon itself depending on the mutual-spacing positions of said sections (3a, 3b) of the bar (3).

7. An element as claimed in claim 1, characterized in that said mechanical and electrical connecting means (6) comprises end portions (3c, 3d) for engagement of said sections (3a, 3b) adapted to be overlapped to a varying extent, and locking elements (8) for fastening said end portions to each other.

8. An element as claimed in claim 7, characterized in that said locking elements (8) are defined by bolts introduced into through holes (3e) formed in said end portions (3c, 3d).

9. An element as claimed in claim 8, characterized in that said locking elements (8) are defined by bolts passing through at least one longitudinal slot (14) formed in one of said end portions (3c, 3d).

10. An element as claimed in claim 1, characterized in that said casing (2) is made up of three box-shaped portions disposed in succession and comprising two box-shaped end portions (2a, 2b) and one intermediate box-shaped portion (2c) to be overlapped on said end portions to a varying extent and to be locked thereto by said fastening means (5), said intermediate box-shaped portion (2c) being disposed close to said mechanical and electrical connecting means (6) of the bars (3).

11. An element as claimed in claim 2, characterized in that it comprises at least one support element (15) inserted in said casing (2) and formed with through seats (15a) adapted to house at least said substantially tubular section members (7, 9, 11) for connecting said conductive bars (3).

12. An element as claimed in claim 1, characterized in that said support and spacing elements (4) are locked to the casing (9) by a fastening plate (16).

13. An element as claimed in claim 1, characterized in that it comprises at least one flame-arresting partition (17) applied to said bar (3).

## Patentansprüche

1. Fertigleitungselement zur Verteilung von Betriebstrau in Bauwerken umfassend:
- eine kastenförmige Hülle (2),
- eine Vielzahl von Leitschienen (3), die innerhalb dieser Hülle (2) liegen,
- mit der Hülle (2) verbundene Trag- und Distanzelemente (4) für diesen Leitschienen (3),
- wobei jede von dieser Leitschienen (3) aus mindestens zwei Strecken (3a, 3b) besteht, die in einer Längsrichtung auseinander entfernt bzw. zueinander genähert werden können,
- wobei die Hülle (2) aus mindestens zwei kastenförmigen Teilen (2a, 2b) besteht, die teleskopisch verschiebbar sind und miteinander durch Befestigungsmittel (5) verbunden werden können, so daß sie sich der Längsgröße von den Leitschienen (3) anpassen; und
- wobei mechanische und elektrische Verbindungsmittel (6) zwischen den Strecken (3a, 3b) von jeder Leitschiene liegen,
dadurch gekennzeichnet, daß jede von diesen Schienen (3) einen Griffbereich (3f) umfasst, der seitlich von der Längsentwicklungsachse der Schiene (3) verschoben ist, und daß mindestens zwei Trag- und Distanzelemente (4) vorliegen, die auf den Schienen (3), in der Nähe von gegeneinandergesetzten Enden der Griffbereichen (3f) der Schienen (3) angeordnet sind, wobei diese Trag- und Distanzelemente (4) an der Hülle (2) befestigt sind.

2. Element nach Anspruch 1 dadurch gekennzeichnet, daß das mechanische und elektrische Verbindungsmittel (6) ein wesentlich rohrförmige Profil (7, 9, 11) umfasst, das Endteile (3c, 3d) von den Strecken (3a, 3d) jeder Leitschiene und Befestigungselemente (8) zwischen den Endteilen (3c, 3d) und dem Profil (7, 9, 11) verschiebbar enthalten kann.

3. Element nach Anspruch 2 dadurch gekennzeichnet, daß das Profil (7) einen Längsschlitz (7a) aufweist, wobei diese Befestigungselemente (8) von durch den Schlitz (7a) gehenden Mutterschrauben dargestellt sind.

4. Element nach Anspruch 2 dadurch gekennzeichnet, daß das Profil (9) einen wesentlich C-förmigen Querschnitt aufweist, der beim Öffnen eine Längsöffnung (10) bildet.

5. Element nach Anspruch 2 dadurch gekennzeichnet, daß das Profil (11) eine Vielzahl von in einer longitudinalen Reihe eingestellten Durchgangslöchern (12), wobei die Befestigungselemente (8) von durch die Durchgangslöcher (12) einzubringenden Mutterschrauben dargestellt sind.

6. Element nach Anspruch 1 dadurch gekennzeichnet, daß das mechanische und elektrische Verbindungsmittel (6) ein biegsame Element (13) umfasst, das an den Enden von Endteilen (3c, 3d) von den Strecken (3a, 3b) jeder Leitschiene (3) befestigt ist, wobei das biegsame Element (13) an sich selbst gemäß der Distanzstellungen von den Strecken (3a, 3b) der Schiene (3) gebogen werden kann.

7. Element nach Anspruch 1 dadurch gekennzeichnet, daß das mechanische und elektrische Verbindungsmittel (6) zur Verbindung von den Strecken (3a, 3b) geeignete Endteilen (3c, 3d), die unterschiedlich übereinander gelegt werden können, und Befestigungselemente (8) zur Befestigung von diesen Endteilen aneinander umfasst.

8. Element nach Anspruch 7 dadurch gekennzeichnet, daß die Befestigungselemente (8) von in Durchgangslöcher (3e) eingebrachten Mutterschrauben dargestellt sind, wobei diese Durchgangslöcher in den Endteilen (3c, 3d) gebildet sind.

9. Element nach Anspruch 8 dadurch gekennzeichnet, daß die Befestigungselemente (8) von durch mindestens einen Längsschlitz (14) gehenden Mutterschrauben dargestellt sind, wobei der Längsschlitz in einem von den Endteilen (3c, 3d) gemacht ist.

10. Element nach Anspruch 1 dadurch gekennzeichnet, daß die Hülle (2) aus drei in einer Reihe angeordneten kastenförmigen Teilen, die zwei kastenförmigen Endteilen (2a, 2b) und einen kastenförmigen Zwischenteil (2c) umfassen, besteht, wobei der Zwischenteil unterschiedlich über die Endteile gelegt werden kann und an diesen mittels den Befestigungsmitteln (5) befestigt werden kann, wobei der kastenförmige Zwischenteil (2c) in der Nähe vom mechanischen und elektrischen Verbindungsmittel (6) der Schienen (3) angeordnet ist.

11. Element nach Anspruch 2 dadurch gekennzeichnet, daß es aus mindestens einem in die Hülle (2) eingebrachten Tragelement (15), das durchgehende Sitze (15a) aufweist, besteht die mindestens die wesentlich rohrförmigen Profile (7, 9, 11) zur Verbindung der Leitschienen (3) enthalten können.

12. Element nach Anspruch 1 dadurch gekennzeichnet, daß die Trag- und Distanzelemente (4) an der Hülle (2) mittels einer Befestigungsplatte (16) befestigt sind.

13. Element nach Anspruch 1 dadurch gekennzeichnet, daß es mindestens eine auf die Schiene (3) angebrachte Ausfeuerscheidewand (17) aufweist.

## Revendications

1. Elément de conduit préfabriqué pour la distribution de force motrice dans des bâtiments, comprenant:
- un logement en forme de boîte (2),
- une pluralité de barres conductrices (3) logées dans ledit logement (2),
- éléments de support et d'écartement (4) pour lesdites barres conductrices (3), engagés dans ledit logement (2),
- chacune desdites barres conductrices (3) comprenant au moins deux sections (3a, 3b) qui peuvent être écartées ou approchées l'une de l'autre en direction longitudinale,
- ledit logement (2) comprenant au moins deux parties en forme de boîte (2a, 2b), qui peuvent glissées télescopiquement et être engagées l'une avec l'autre par des moyens de fixage (5), de sorte que ces parties s'adaptent à l'encombrement longitudinal desdites barres conductrices (3); et
- moyens de connexion mécanique et électrique (6) étant pourvus entre lesdites sections (3a, 3b) de chaque barre conductrice,
caractérisé en ce que chacune desdites barres (2) comprend une zone en forme de poignée (3f) déplacée latéralement par rapport à l'axe en extension longitudinale de la barre (3), et en ce que on a pourvu au moins deux éléments de support et d'écartement (4) qui sont placés sur ces barres (3), près d'extrémités opposées desdites zones en forme de poignée (3f) des barres (3), lesdits éléments de support et d'écartement (4) étant fixés au logement (2).

2. Elément selon la revendication 1, caractérisé en ce que le moyen de connexion mécanique et électrique (6) comprend un profilé substantiellement tubulaire (7, 9, 11) apte à loger de façon glissante parties terminales (3c, 3d) desdites sections (3a, 3b) de chaque barre conductrice, et éléments de fixage (8) entre lesdites parties terminales (3c, 3d) et le profilé (7, 9, 11).

3. Elément selon la revendication 2, caractérisé en ce que ledit profilé (7) présente une fente longitudinale (7a), et lesdits éléments de fixage sont représentés par bullons passant à travers ladite fente (7a).

4. Elément selon la revendication 2, caractérisé en ce que ledit profilé (9) présente une section transversale substantiellement en C, apte à définir, en s'ouvrant, une ouverture (10) longitudinale.

5. Elément selon la revendication 2, caractérisé en ce que ledit profilé (11) présente une pluralité de trous passants (12) qui sont alignés dans une rangée longitudinale, et lesdits éléments de fixage (8) sont représentés par bullons à introduire dans lesdits trous passants (12).

6. Elément selon la revendication 1, caractérisé en ce que ledit moyen de connexion mécanique et électrique (6) comprend un élément flexible (13) fixé aux extrémités de parties terminales (3c, 3d) desdites sections (3a, 3b) de chaque barre conductrice (3), ledit élément flexible (13) étant pliable sur lui-même selon les positions d'écartement réciproque desdites sections (3a, 3b) de la barre (3).

7. Elément selon la revendication 1, caractérisé en ce que ledit moyen de connexion mécanique et électrique (6) comprend parties terminales (3c, 3d) pour l'engagement desdites sections (3a, 3b), aptes à se superposer de façon différente, et éléments de fixage (8) pour fixer lesdites parties terminales entre elles.

8. Elément selon la revendication 7, caractérisé en ce que lesdits éléments de fixage (8) sont définis par des bullons introduits dans trous passants (3e) formés dans lesdites parties terminales (3c, 3d).

9. Elément selon la revendication 8, caractérisé en ce que lesdits éléments de fixage (8) sont définis par des bullons qui passent à travers au moins une fente longitudinale (14) formée dans une desdites parties terminales (3c, 3d).

10. Elément selon la revendication 1, caractérisé en ce que ledit logement (2) se compose de trois parties en forme de boîte, placées en successions et comprenant deux parties terminales en forme de boîte (2a, 2b) et une partie intermédiaire en forme de boîte (2c) à superposer sur lesdites parties terminales de façon différente et à fixer aux dites parties par lesdits moyens de fixage (5), ladite partie intermédiaire en forme de boîte (2c) étant placée près desdits moyens de connexion mécanique et électrique (6) des barres (3).

11. Elément selon la revendication 2, caractérisé en ce que il comprend au moins un élément de support (15) introduit dans ledit logement (2) et composé par logements passants (15a) aptes à loger au moins lesdits profilés substantiellement tubulaires (7, 9, 11) pour connecter lesdites barres conductrices (3).

12. Elément selon la revendication 1, caractérisé en ce que lesdits élément de support et d'écartement (4) sont fixés au logement (2) par une plaque de fixage (16).

13. Elément selon la revendication 1, caractérisé en ce que il comprend au moins une cloison para-feu (17) appliquée à ladite barre (3).
